# EUROPEAN PATENT APPLICATION

(11) **EP 1 418 520 A1**
(43) Date of publication of application: **12.05.2004**
(21) Application number: 02780854.2
(22) Date of filing: 24.06.2002
(51) Int. Cl.: G06F 19/00, G06F 17/30, H04N 7/16, G06T 13/00

(54) **CONTENT DELIVERY METHOD, SCENARIO DATA, RECORDING MEDIUM, AND SCENARIO DATA CREATION METHOD**

(30) Priority: 25.06.2001 JP 2001192062
(71) Applicant: Nova Co., Ltd., Osaka-shi, Osaka 542-0086 (JP)
(72) Inventor: SARUHASHI, Nozomu, NOVA CO., LTD., Osaka-shi, Osaka 542-0086 (JP); UEMURA, Masahide, NOVA CO., LTD., Osaka-shi, Osaka 542-0086 (JP); SHIMAMOTO, Katsunori, NOVA CO., LTD., Osaka-shi, Osaka 542-0086 (JP); YASUMI, Yu, NOVA CO., LTD., Osaka-shi, Osaka 542-0086 (JP)
(74) Representative: Schoppe, Fritz, Dipl.-Ing.
(86) International application number: PCT/JP2002/006300
(87) International publication number: WO 2003/001430

(57) **Abstract**

A contents delivery method which eliminates the need for the prior synthesis and storing of delivery contents and thus allows a reduction in memory capacity even when the contents to be delivered consist of a plurality of pieces of material contents which are synthesized. Scenario data for defining the replay order of materials of contents to be delivered, or material contents, along a time axis is used to fetch and deliver material contents specified by the scenario data. The scenario data includes the attribute of delivery contents, and the attributes, replay times, replay modes, replay applications, source terminal operation information, destination terminal operation information, and location information of the material contents specified. There are also provided scenario templates and scenario dictionaries for scenario creation, and a function for creating scenarios automatically.

## Description

### TECHNICAL FIELD

The invention relates to a method of delivering contents for situations where multimedia contents including moving images, still images, music, sounds, and text data are delivered to user terminals in connection with communication lines, thereby providing information communication services such as conferences, education, medical care, nursing care, and various consultations.

### BACKGROUND ART

In conventional contents delivery methods for such information communication services, contents providers have registered the to-be-provided contents on a server beforehand so that certain contents are selected under requests from the user terminals and delivered via the communication lines. Thus, if the contents to be delivered do not consist of a single piece but a plurality of pieces of material contents which are synthesized, they must be synthesized and stored on the server in advance.

Nevertheless, when the contents for the contents providers to provide range widely and delivery is required of a number of variations of contents with partial modifications to the material contents, it can cause a deterioration in work efficiency and an increase in memory capacity to create and store all the types of delivery contents, or material contents synthesized, on the server in advance.

In particular, in the cases of language education at remote sites via communication lines, the educational materials need a great deal of TPO-specific contents, as well as various types of contents by country, by language, and by theme which feature recent hot topics. Since the contents to be delivered include a considerable amount of common materials, it is extremely inefficient to synthesize and store them in advance. There have thus been such problems as a large amount of memory capacity being required.

In view of the foregoing, it is a principle object of the present invention to provide a contents delivery method which can eliminate the need for the prior synthesis and storing of delivery contents and thus allow a reduction in memory capacity even when a plurality of pieces of material contents synthesized are to be delivered.

### DISCLOSURE OF THE INVENTION

The contents delivery method according to claim 1 is one in which scenario data for defining the replay order of materials of contents to be delivered, or material contents, along a time axis is used to fetch and deliver material contents specified by the scenario data.

The contents delivery method of the present invention according to claim 2 is one according to claim 1, comprising the steps of: storing the material contents; storing the scenario data; fetching the stored scenario data; fetching material contents specified by the fetched scenario data out of the stored material contents; and delivering the fetched material contents to a user terminal along with the scenario data.

In this case, the material contents are replayed separately on the user-terminal side. Operations on the material contents can thus be made easily on the user-terminal side. The method can also reduce the load on the communication lines when identical materials are used repeatedly.

The contents delivery method of the present invention according to claim 3 is one according to claim 1, comprising the steps of: storing the material contents; storing the scenario data; fetching the stored scenario data; fetching material contents specified by the fetched scenario data; synthesizing the fetched material contents based on the scenario; and delivering the synthesized material contents to a user terminal.

In this case, the material contents are synthesized on the delivering side before delivery. This facilitates such operations as superimposition of captions on moving images and still images. Besides, the load on the user terminal is reduced.

The scenario data according to claim 4 is that for use in the contents delivery method according to any one of claims 1 to 3, including attribute information on the contents to be delivered.

This facilitates retrieving delivery contents.

The scenario data according to claim 5 is that for use in the contents delivery method according to any one of claims 1 to 3, including attribute information on the specified material contents.

This allows retrieval of a scenario and material contents based on the attributes of the material contents in use.

The scenario data according to claim 6 is that for use in the contents delivery method according to any one of claims 1 to 3, including replay time specification information for specifying the time of replay of the specified material contents.

This makes it possible to replay the material contents at specified time within the delivery contents.

The scenario data according to claim 7 is that for use in the contents delivery method according to any one of claims 1 to 3, including replay mode specification information for specifying whether to replay the specified material contents automatically or at timing designated by the user terminal.

This makes it possible to replay the material contents at arbitrary time through manual operations from the user terminal.

The scenario data according to claim 8 is that for use in the contents delivery method according to any one of claims 1 to 3, including replay application specification information for specifying an application for replaying the specified material contents.

Consequently, the application for replaying the material contents is defined by the scenario.

The scenario data according to claim 9 is that for use in the contents delivery method according to any one of claims 1 to 3, including replay screen specification information for specifying the position and size of the specified material contents to be replayed on-screen.

The position and size of the material contents under replay on-screen can thus be specified for effective presentation.

The scenario data according to claim 10 is that for use in the contents delivery method according to any one of claims 1 to 3, including source terminal operation specification information for specifying an operation available to a source terminal.

The replay of the material contents can thus be controlled from the source terminal.

The scenario data according to claim 11 is that for use in the contents delivery method according to any one of claims 1 to 3, including destination terminal operation specification information for specifying an operation available to a destination terminal.

The replay of the material contents can thus be controlled from the destination terminal.

The scenario data according to claim 12 is that for use in the contents delivery method according to any one of claims 1 to 3, including location specification information for specifying a location for storing the specified material contents.

This makes it possible to replay material contents even if the user terminal does not contain the material contents. In addition, material contents managed in a plurality of contents delivery centers can be used to provide delivery contents.

The scenario data according to claim 13 is that for use in the contents delivery method according to any one of claims 1 to 3, including replay part specification information for specifying a part of the specified material contents to be replayed.

This allows specifications for partial replay of the material contents.

The computer-readable recording medium according to claim 14 is one on which the scenario data according to any one of claims 4 to 13 is recorded.

The computer-readable recording medium according to claim 15 is one on which the scenario data according to any one of claims 4 to 13 and the material contents specified by the scenario data are recorded.

Consequently, this recording medium can be replayed alone.

The scenario data creation method according to claim 16 is a method of creating the scenario data according any one of claims 4 to 13, comprising the steps of: entering a keyword; and retrieving related material contents based on the entered keyword.

This allows efficient selection of material contents to be set into the scenario.

The scenario data creation method according to claim 17 is a method of creating the scenario data according any one of claims 4 to 13, comprising the steps of: providing a scenario dictionary describing a relationship between genres for indicating types of delivery contents and the associated information and entering a genre; consulting the scenario dictionary to retrieve associated information based on the entered genre; and retrieving related material contents based on the associated information retrieved.

The use of the scenario dictionary allows more efficient selection of the material contents to be set into the scenario.

The scenario data creation method according to claim 18 is a method of creating the scenario data according any one of claims 4 to 13, comprising the steps of: providing a replay chart displaying a replay time of material contents in the form of a chart; and allocating the material contents to the replay chart.

The use of the replay chart facilitates setting the replay time specification information on the material contents. In addition, the interrelationship between the replay time periods of the respective pieces of material contents is clarified for effective contents creation.

The scenario data creation method according to claim 19 is a method of creating the scenario data according any one of claims 4 to 13, comprising the steps of: providing a scenario template describing a basic configuration pattern of scenario data; and retrieving material contents settable into the scenario template.

The use of the scenario template eliminates the need for detailed settings of attribute information, with an improvement in the efficiency of creation of the scenario data.

The scenario data creation method according to claim 20 is a method of creating the scenario data according any one of claims 4 to 13, comprising the steps of: providing a scenario dictionary describing a relationship between genres for indicating types of delivery contents and associated information, and a scenario template describing a basic configuration pattern of scenario data; entering a genre; consulting the scenario dictionary to retrieve the associated information based on the entered genre; retrieving related material contents based on the associated information retrieved; retrieving the scenario template based on the entered genre; retrieving material contents settable to the retrieved scenario template out of the retrieved material contents; and transcribing the attribute information on the retrieved material contents to the scenario template.

The use of both the scenario dictionary and the scenario template automates the retrieval of material contents and the setting of the attribute information of the material contents to the scenario data. This improves the efficiency of scenario creation further.

The scenario data creation method according to claim 21 is one according to claim 19 or 20, wherein scenario data created in advance can be used as the scenario template.

This makes it possible to create scenarios without preparing scenario templates. This also facilitates creating scenarios of modified contents easily based on the scenarios registered previously.

The foregoing and other objects, features, and advantages of the invention will become more apparent from the following detailed description of an embodiment of the invention when read in conjunction with the drawings.

### BRIEF DESCRIPTION OF THE DRAWINGS

Fig. 1 is a block diagram showing a contents delivery center for delivering contents by the contents delivery method according to an embodiment of the present invention;
Fig. 2 is a conceptual diagram showing a contents delivery function according to the embodiment of the present invention;
Fig. 3 is a conceptual diagram showing the method of expressing delivery contents in a scenario;
Fig. 4 is a chart showing an example of the scenario for use in the contents delivery of the present invention;
Fig. 5 is a diagram showing the procedure for scenario-based contents delivery;
Fig. 6 is a diagram showing the procedure for operation control on contents under delivery;
Fig. 7 is a diagram showing a contents management database for automatic scenario creation;
Fig. 8 is a diagram showing a sample of description in a scenario dictionary; and
Fig. 9 is a diagram showing the procedure for automatic scenario creation.

### BEST MODE FOR CARRYING OUT THE INVENTION

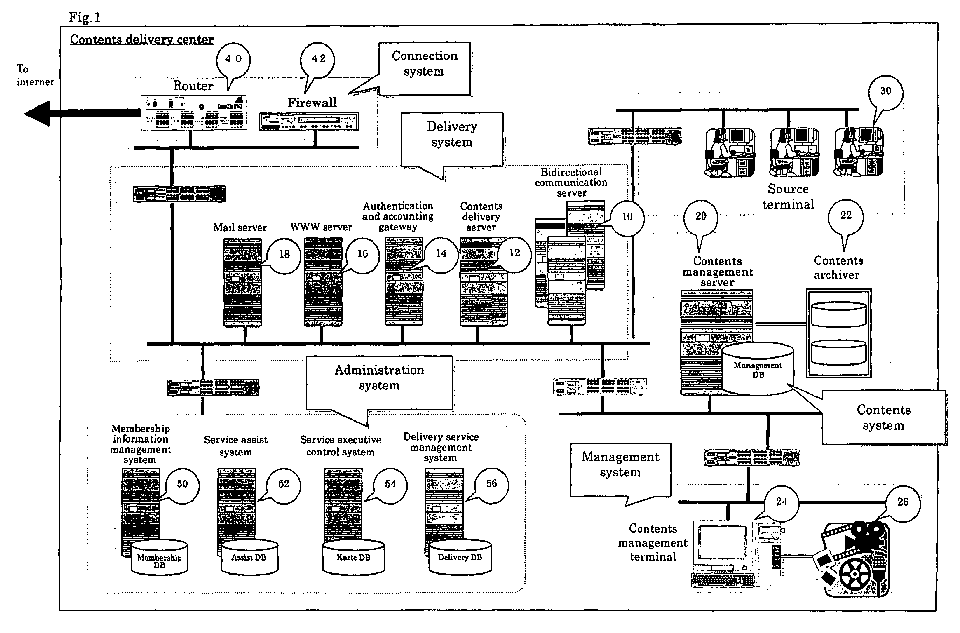

Fig. 1 is a block diagram showing a contents delivery center for delivering contents by using the contents delivery method according to an embodiment of the present invention. As shown in the diagram, the center comprises a contents delivery server 12, a WWW server 16, a contents management server 20, a contents archiver 22, a contents management terminal 24, source terminals 30, a router 40, and a firewall 42, which are connected over a network. The contents delivery server 12 delivers contents to users over the Internet. The WWW server 16 delivers Web pages for use in authenticating users, selecting service menus, and so on. The contents management server 20 registers and stores multimedia contents including moving images, still images, sounds, text, and sound effects. The contents archiver 22 contains material contents. The contents management terminal 24 is used to make contents registration and storing operations by a contents manager. The source terminals 30 are user terminals installed in the center, and from which delivery and other instructions are issued. The router 40 establishes connection with the Internet. The firewall 42 avoids unauthorized entries from exterior for system protection.

In addition, the center also includes a bidirectional communication server 10, an authentication and accounting gateway 14, a mail server 18, and administration system (50-56). Description thereof will be omitted since they are not directly relevant to the present invention.

Of user terminals, destination terminals that receive contents delivery are not shown. Users can access the WWW server 16 of the center to receive contents delivery services with personal computers having Internet-connection facilities or dedicated terminals as the destination terminals. When this contents delivery center is used for educational services, instructors use the source terminals 30, and students the destination terminals. As employed in the following description, the "user terminals" refer to both the destination terminals and the source terminals 30.

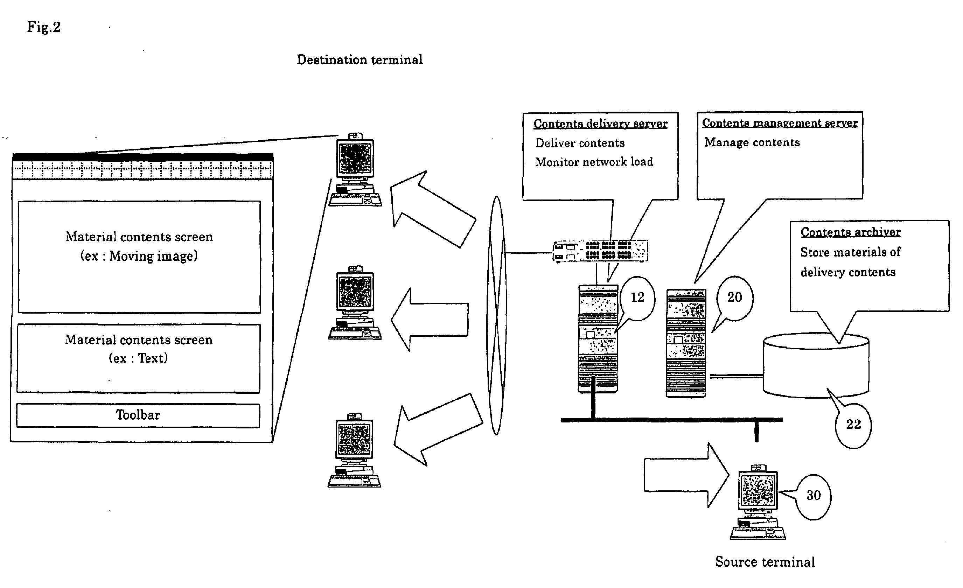

Next, description will be given of the functions and procedure for the contents delivery server 12 to provide. Fig. 2 is a conceptual diagram showing a contents delivery function to be provided by this contents delivery center. With the contents delivery function, the contents delivery server 12 delivers, to the destination terminals over the Internet, multimedia contents such as moving images, still images, sounds, text, and application data that are recorded on the contents archiver 22 managed by the contents management server 20.

In the contents delivery method of the present embodiment, the materials of the contents to be delivered, or material contents, are recorded on the contents archiver 22 and combined into contents for delivery. For this purpose, delivery contents are expressed in a scenario which defines a combination of material contents along the time axis.

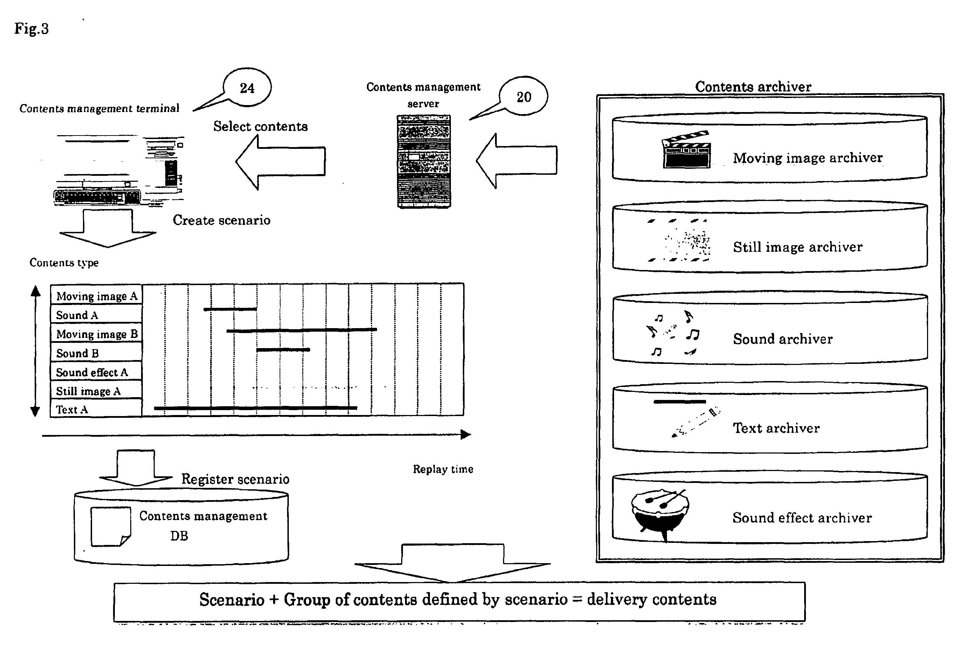

Fig. 3 is a conceptual diagram showing the method of expressing delivery contents in a scenario. More specifically, the delivery contents creator previously registers the material contents necessary for services into the contents archiver 22 via the contents management server 20 by using the contents management terminal 24. At the time of creation of the delivery contents, the material contents to be combined into the delivery contents are selected out of the material contents recorded on the contents archiver 22. As shown in the diagram, by using a chart which indicates the replay times of the material contents, or a replay chart, the material contents to be combined are registered along the time axis to create a scenario. The created scenario is registered into a database of the contents management server 20.

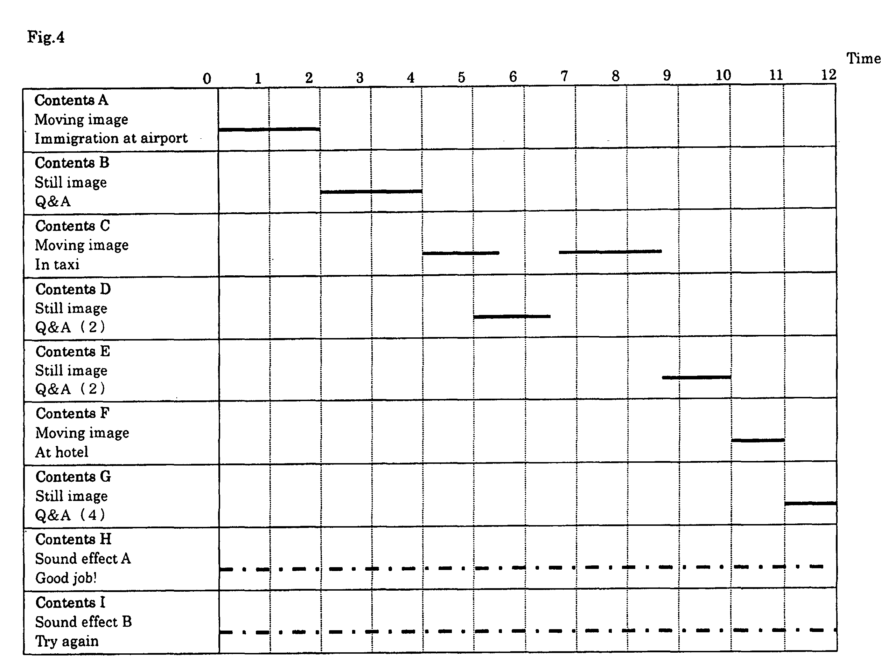

Fig. 4 shows an example of the scenario created. As shown, a combination of moving images, still images, sound effects, and the like is defined along the time axis to constitute a single piece of delivery contents. This example is of an educational material for use in language education or the like. Here, the dot-line expressions represent ones which can be replayed by terminal operations anytime within a specific period. Consequently, for example, the terminal user can replay sound effects, subtitles, etc. anytime within a specific period for effective presentation.

A scenario includes the following information in order to achieve delivery of a combination of material contents and allow flexible administration.

### 1. Definition of Delivery Contents

Information as to the entire contents for delivery is defined.

### (1) Delivery contents attribute information

Describes creator, creation date and time, title, genre, and additional information. This allows retrieval of the delivery contents (scenario).

### (2) Used material contents information

Specifies material contents to be used in the delivery contents.

### 2. Definition of Material Contents

Information as to each piece of the material contents to be used in the delivery contents is defined.

### (1) Material contents attribute information

Describes creator, creation date and time, title, genre, and additional information. This allows retrieval of the delivery contents (scenario) based on the attributes of the material contents used.

### (2) Material contents type information

Specifies the type of material contents (moving image/still image/sound/text/application data). Here, the filename extension of the designated material contents may be used for specification.

### (3) Replay time specification information

Specifies the replay start time and replay end time of the material contents in terms of relative time within the delivery contents. This can specify the replay period of the material contents within the delivery contents. A replay time may be used instead of the replay end time.

Here, the replay end time/replay time may be omitted if the material contents have a fixed replay time.

### (4) Replay mode specification information

Specifies the mode of replay of the material contents between automatic replay and manual replay. In the case of manual replay, the contents are replayed under the instruction from the user terminal. For example, this makes it possible to replay sound effects, subtitles, and the like at arbitrary timing for effective presentation.

### (5) Replay application specification information

Specifies which application is used to replay the material contents. The application for replaying the material contents is thus defined by the scenario. Here, the filename extension of the designated material contents may be used for specification.

### (6) Replay screen specification information

Specifies the position and size of the material contents to be replayed on-screen. The position and size of the material contents under replay on-screen can thus be specified for effective presentation. For sounds, an icon to appear on-screen and the position thereof may be specified.

### (7) Source terminal operation specification information

Specifies operations (play/stop/pause/fast forward/rewind, etc.) available for the source terminal 30 during the replay of the material contents. The source-side user can thus control contents replay in accordance with the progress of the service, allowing various service modes.

### (8) Destination terminal operation specification information

Specifies operations (play/stop/pause/fast forward/rewind) available for the destination terminal during the replay of the material contents. This allows destination users to replay the contents according to their own paces.

### (9) Location specification information

Specifies the location where the material contents are stored. This makes it possible to replay the material contents by designating a protocol and server name even if the user terminal does not contain the material contents. Material contents managed in a plurality of this contents delivery centers can also be used for contents delivery. Moreover, the picture and sound link unit 26 can achieve a live link when the contents management server 20 is specified as the location.

### (10) Replay part specification information

Specifies the start time and end time of the part of the material contents to replay. This allows specifications for partial replay of the material contents. A replay time may be used instead of the end time.

Next, description will be given of the method of delivering contents by using the scenario described above.

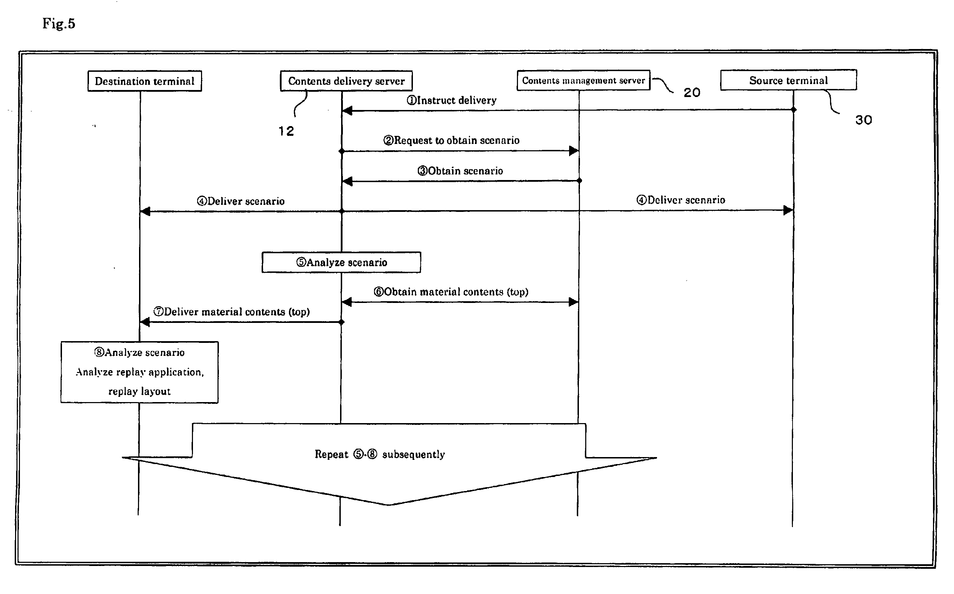

Fig. 5 shows the procedure for scenario-based contents delivery. The contents delivery server 12 receives a contents delivery request from the source terminal 30 via the WWW server 16, and obtains the scenario from the contents management server. The contents delivery server 12 also delivers the obtained scenario to the destination terminal for the sake of controlling by the destination terminal.
Subsequently, the contents delivery server 12 analyzes the scenario, fetches the material contents defined in the scenario from the contents archiver via the contents management server 20 in succession along the time axis, and delivers the same to the destination terminal. These operations are performed on all the material contents defined in the scenario to complete the delivery of the delivery contents.

The destination terminal receives the delivered contents, and replays the same by using designated applications according to the description of the scenario, so that images are displayed in the specified positions on-screen. When a certain operation is specified by the source terminal or the destination terminal, a predetermined replay control is effected under the command from that terminal.

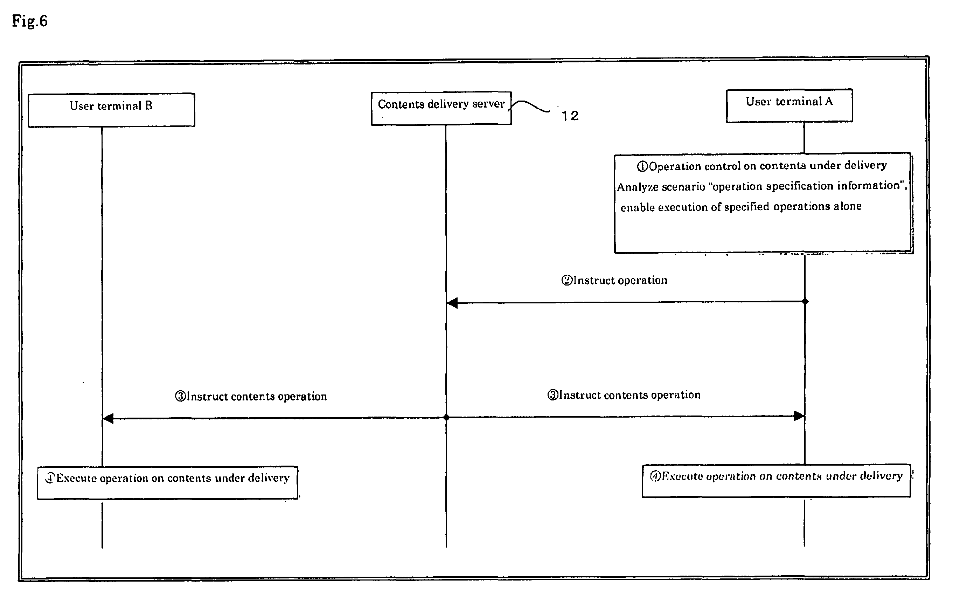

Now, description will be given of the synchronization of replay of the material contents between terminals. Fig. 6 shows the procedure for operation control on contents under delivery. As shown in Fig. 2, a toolbar appears on the terminal screens. Operable buttons are shown activated, based on the operation specification information of the scenario. When an active operation button is pressed, the information on the operation instruction is posted to the contents delivery server 12 from the terminal. The contents delivery server 12 delivers the operation instruction to the individual terminals. Since each of the terminals performs replay based on the operation instruction, the material contents are replayed by all the terminals synchronously.

The foregoing embodiment has dealt with the case where the scenario is stored in the database of the contents management server 20 and the material contents are registered in the contents archiver 22 in advance. However, the present invention is not necessarily limited thereto. For example, contents delivery may be performed online along with scenario creation. Material contents may be supplied online from another system. The same effects can thus be obtained as long as material contents are fetched and delivered based on a scenario.

The contents management server 20 is provided with the picture and sound link unit 26, and has the function of capturing picture signals and sounds signals connected thereto and converting the same into deliverable formats. This allows real-time link of live pictures and sounds to the contents to be delivered.

The multimedia information to be delivered to the user terminals may be modified in quality depending on the communication band of the network. Specifically, there is provided the function of lowering the picture frame rate when the available communication band is narrow. Another function may be provided for lowering the sampling rate and the quantization bit rate of the sounds when the available communication band is narrow. The communication band may be detected by such means as packet exchange at the stage of negotiation prior to communication, or by sending packets for checking the communication band during communication. Consequently, even when the communication band of the network is limited, the contents delivery functions having quality corresponding to the communication band can be maintained for optimum services.

In the foregoing embodiment, the contents delivery server 12 initially transmits the scenario to the destination terminal(s), and then delivers the material contents at the respective replay times defined in the scenario so that the destination terminal(s) performs replay based on the scenario. Nevertheless, the destination terminal(s) may issue requests based on the scenario that the contents delivery server 12 deliver necessary material contents. In this case, if identical material contents are used repeatedly, the material contents delivered previously can be reused with a reduction in network load.

The contents delivery server 12 may deliver images and sounds that are synthesized according to the scenario, instead of delivering the separate material contents to the destination terminal(s). This facilitates such operations as superimposing subtitles on moving images and still images. This also reduces the load on the destination terminal(s), though with limitation to the operation flexibility in the destination terminal(s). Which method to adopt, delivering separate material contents or synthesized ones, may be selected depending on the network load and the service contents. Both types of contents may be delivered in combination, and replayed in respective separate windows on the destination-terminal side. This makes it possible to provide a contents delivery function of extremely high flexibility with suppressed network load.

The scenario described above may be written in XML or other description languages. This allows the individual terminals to read the scenario with their browsers, so that material contents can be selected along the time axis and replayed automatically by plug-in applications of the browsers.

Next, description will be given of the method of creating the scenario described above.

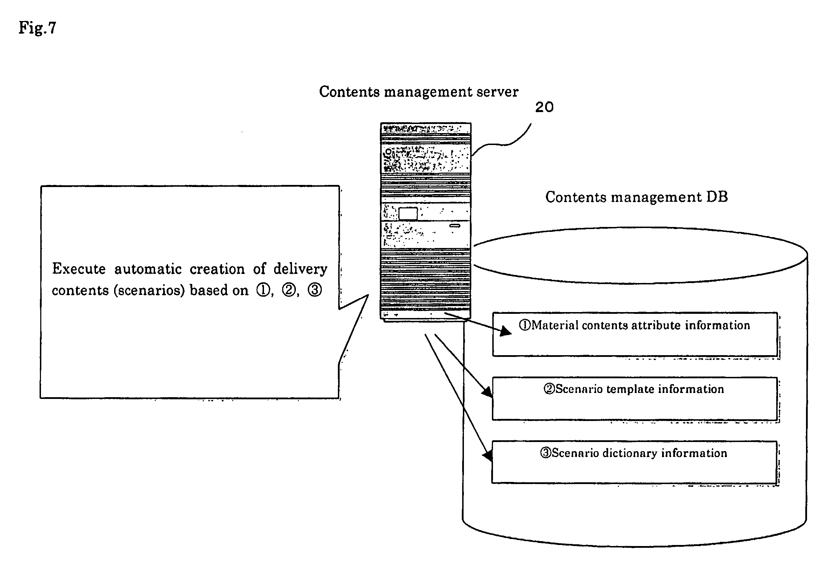

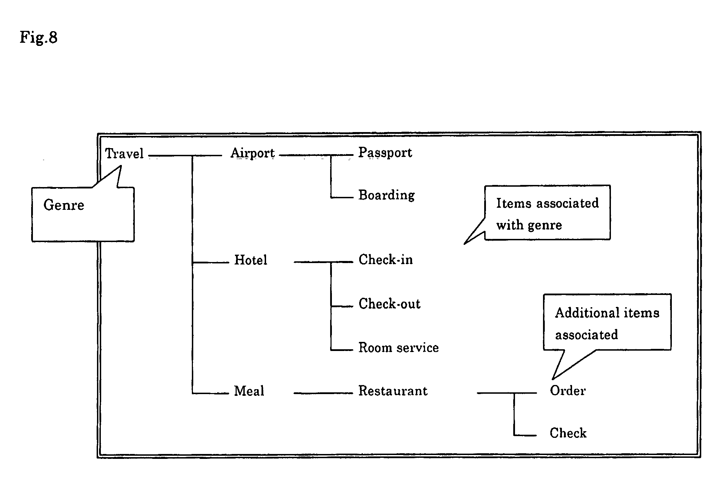

In this contents delivery center, as shown in Fig. 7, the contents management database of the contents management server 20 contains attribute information, scenario dictionaries, and scenario templates. The attribute information concerns the material contents that are stored in the contents archiver 22. The scenario dictionaries show the relationship of the types of contents, or genres, with associated information. The scenario templates describe basic configuration patterns of scenarios. Then, the contents management server 20 has the function of creating scenarios automatically based on these. Fig. 8 shows a sample of description in a scenario dictionary. As shown in the diagram, associated information for a single genre is written in a tree form. Such scenario dictionaries are prepared in advance so as to cover the attribute information of the registered material contents. The scenario templates describe genres, replay time, and the numbers of pieces of material contents, as well as the attribute information, type information, replay time information, operation information, and the like of the material contents specifiable. The scenario templates are created and registered for necessary patterns in advance.

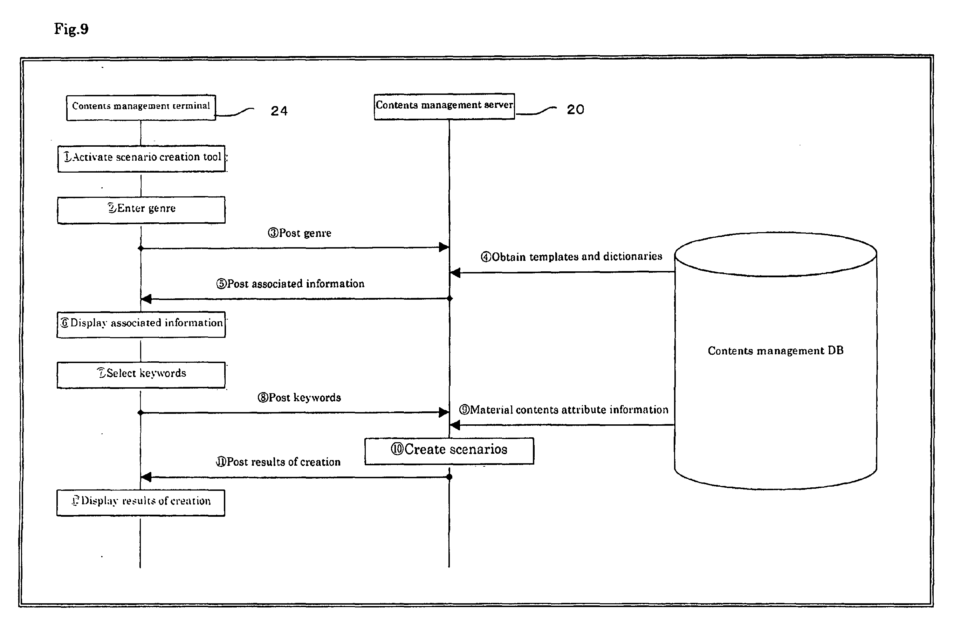

Fig. 9 shows the procedure for creating scenarios automatically by using the contents management database mentioned above. The scenario creator activates a scenario creation tool from the contents management terminal 24. When a genre is entered by the scenario creator, the contents management terminal 24 posts it to the contents management server 20. The contents management server 20 retrieves scenario templates and a scenario dictionary conforming to the posted genre from the contents management database. It also retrieves associated information from the scenario dictionary based on the genre and posts it to the contents management terminal 24. The contents management terminal 24 displays the associated information posted, and posts keywords that are entered by the scenario creator based on the display to the contents management server 20. The contents management server 20 retrieves the material contents that fit with the scenario templates based on the keywords posted, and obtains attribute information thereof. The contents management server 20 creates scenarios by transcribing the obtained attribute information of the material contents into the corresponding positions of the scenario templates, and posts the results of creation to the contents management terminal 24. The contents management terminal 24 displays the results of creation, modifies and edits the same if needed, and registers the completed scenarios into the contents management database of the contents management server 20.

As above, the scenarios are created automatically in this contents delivery center, and new contents incorporating hot topics can be made rapidly for effective provision of contents delivery service.

In the foregoing embodiment, the scenario templates are selected by entering a genre alone. It is also possible, however, to designate the replay time or the ratios of contents types in the replay contents. Moreover, in order to inform the scenario creator of possible genres, replay times, and contents ratios in advance, the information as to the registered scenario templates may be displayed so that selections are made from the same.

In the foregoing embodiment, the scenarios are created automatically by using the scenario dictionaries which describe the relationship between genres and associated information, and scenario templates which describe scenario configuration patterns for creating scenarios. However, the scenarios need not necessarily be created automatically. The scenario creator may enter keywords, retrieve related material contents based on the same, and write the attribute information of the retrieved material contents in the form of scenario data. In this case, necessary material contents can be fetched quickly with an improvement in the efficiency of scenario creation. Incidentally, the attribute information of the material contents may be written into scenario data by such means as a text editor.

The scenario dictionaries may be used alone to retrieve associated information based on the genre entry. Then, the material contents are retrieved based on the associated information, and the attribute information of the retrieved material contents is written into scenario data. Necessary material contents can thus be fetched quicker than in the case of entering keywords, with a further improvement in the efficiency of scenario creation.

In addition, the replay time specification information of the material contents may be set by using a replay chart which shows the replay periods of the respective pieces of material contents. For example, as shown in Fig. 4, a minimum unit time for replaying material contents may be determined in advance so that the replay time specification information is set by selecting frames for replaying the material contents on-screen. This facilitates setting the replay time specification information of the material contents and clarifies the interrelationship among the replay periods of the respective pieces of material contents, allowing effective contents creation.

Scenario templates may be selected based on the genre entry among scenario templates. Here, a list of material contents conforming thereto is displayed, and desired material contents are selected from the list. This automatic retrieval of material contents conforming to scenario templates facilitates combining the material contents. The attribute information of the material contents may be transcribed to the scenario data automatically with a dramatic improvement in the efficiency of scenario creation.

While the foregoing embodiment has dealt with the case where the scenario templates describing basic scenario patterns are created in advance, scenarios registered previously may be used as scenario templates. This makes it possible to create scenarios without preparing scenario templates in advance. This also facilitates creating scenarios of modified contents easily based on the scenarios registered previously.

In the foregoing embodiment, the Internet is used as the communication lines. The services are thus available to even remote locations anytime without worry about telephone bills. The foregoing embodiment has dealt with the case where the source-side control is effected by using the source terminals 30 in the contents delivery center. Nevertheless, the present invention is not limited thereto, and terminals connected to the Internet may be used. Delivery control can thus be exercised anytime from anywhere as long as Internet-capable terminals are available. Consequently, the contents delivery center can be used for such application as service provision at remote locations.

The foregoing embodiment has dealt with the case where the Internet is used as the communication lines. However, the present invention is not limited thereto. Telephone lines may be used to connect to the contents delivery center directly.

Alternatively, LAN, WAN, and the like may be used in such applications as corporate education and school education. The present invention also provides the same effects even when used for services to be provided in a certain group. Needless to say, the communication lines are not limited to wired ones, but may also be wireless ones.

The present invention is also applicable when the contents delivery center is provided with booths for contents delivery services, in which a variety of multimedia contents including combinations of material contents can be provided through scenario-based delivery.

### INDUSTRIAL APPLICABILITY

As has been described, according to the present invention, scenario data for defining the order of replay of materials of contents to be delivered, or material contents, along the time axis is used to fetch and deliver material contents defined by the scenario data. Consequently, even if the contents to be delivered include a plurality of pieces of material contents which are synthesized, the delivery contents need not be synthesized and stored in advance. This provides the effect of a reduction in memory capacity.

## Claims

1. A contents delivery method for delivering multimedia contents stored in advance to a user terminal by using a communication line, wherein
scenario data for defining replay order of materials of contents to be delivered, or material contents, along a time axis is used to fetch and deliver material contents specified by the scenario data.

2. The contents delivery method according to claim 1, comprising the steps of:
storing the material contents;
storing the scenario data;
fetching the stored scenario data;
fetching material contents specified by the fetched scenario data out of the stored material contents; and
delivering the fetched material contents to the user terminal along with the scenario data.

3. The contents delivery method according to claim 1, comprising the steps of:
storing the material contents;
storing the scenario data;
fetching the stored scenario data;
fetching material contents specified by the fetched scenario data;
synthesizing the fetched material contents based on the scenario; and
delivering the synthesized material contents to the user terminal.

4. Scenario data for use in the contents delivery method according to any one of claims 1 to 3, including attribute information on the contents to be delivered.

5. Scenario data for use in the contents delivery method according to any one of claims 1 to 3, including attribute information on the specified material contents.

6. Scenario data for use in the contents delivery method according to any one of claims 1 to 3, including replay time specification information for specifying the time of replay of the specified material contents.

7. Scenario data for use in the contents delivery method according to any one of claims 1 to 3, including replay mode specification information for specifying whether to replay the specified material contents automatically or at timing designated by the user terminal.

8. Scenario data for use in the contents delivery method according to any one of claims 1 to 3, including replay application specification information for specifying an application for replaying the specified material contents.

9. Scenario data for use in the contents delivery method according to any one of claims 1 to 3, including replay screen specification information for specifying the position and size of the specified material contents to be replayed on-screen.

10. Scenario data for use in the contents delivery method according to any one of claims 1 to 3, including source terminal operation specification information for specifying an operation available to a source terminal, with respect to the specified material contents.

11. Scenario data for use in the contents delivery method according to any one of claims 1 to 3, including destination terminal operation specification information for specifying an operation available to a destination terminal, with respect to the specified material contents.

12. Scenario data for use in the contents delivery method according to any one of claims 1 to 3, including location specification information for specifying a location for storing the specified material contents.

13. Scenario data for use in the contents delivery method according to any one of claims 1 to 3, including replay part specification information for specifying a part of the specified material contents to be replayed.

14. A computer-readable recording medium, on which the scenario data according to any one of claims 4 to 13 is recorded.

15. A computer-readable recording medium, on which the scenario data according to any one of claims 4 to 13 and the material contents specified by the scenario data are recorded.

16. A scenario data creation method, being a method of creating the scenario data according any one of claims 4 to 13, comprising the steps of:
entering a keyword; and
retrieving related material contents based on the entered keyword.

17. A scenario data creation method, being a method of creating the scenario data according any one of claims 4 to 13, comprising the steps of:
providing a scenario dictionary describing relationship between genres for indicating types of delivery contents and the associated information and entering a genre; consulting the scenario dictionary to retrieve associated information based on the entered genre; and
retrieving related material contents based on the associated information retrieved.

18. A scenario data creation method, being a method of creating the scenario data according any one of claims 4 to 13, comprising the step of:
providing a replay chart displaying a replay time of material contents in the form of a chart and allocating the material contents to the replay chart.

19. A scenario data creation method, being a method of creating the scenario data according any one of claims 4 to 13, comprising the step of:
providing a scenario template describing a basic configuration pattern of scenario data and retrieving material contents settable into the scenario template.

20. A scenario data creation method, being a method of creating the scenario data according any one of claims 4 to 13, comprising the steps of:
providing a scenario dictionary describing a relationship between genres for indicating types of delivery contents and associated information, and a scenario template describing a basic configuration pattern of scenario data, and entering a genre;
consulting the scenario dictionary to retrieve the associated information based on the entered genre;
retrieving related material contents based on the associated information retrieved;
retrieving the scenario template based on the entered genre;
retrieving material contents settable to the retrieved scenario template out of the retrieved material contents; and
transcribing the attribute information on the retrieved material contents to the scenario template.

21. The scenario data creation method according to claim 19 or 20, wherein scenario data created in advance is used as the scenario template.

## Amended claims

### Amended claims under Art. 19.1 PCT

**1.** (Amended) A method of delivering multimedia contents to a plurality of user terminals connected via communication lines, comprising the steps of:
storing materials of contents to be delivered, or material contents;
storing scenario data for defining order of replay of the material contents along a time axis;
accepting a delivery request from one of the user terminals;
fetching scenario data specified by the accepted delivery request;
delivering the fetched scenario data to each of the user terminals;
fetching material contents specified by the fetched scenario data; and
delivering the fetched material contents to each of the user terminals,
wherein each of the user terminals replays the delivered material contents based on the delivered scenario data.

**2.** (Amended) A method of delivering multimedia contents to a plurality of user terminals connected via communication lines, comprising the steps of:
storing materials of contents to be delivered, or material contents;
storing scenario data for defining order of replay of the material contents along a time axis;
accepting a delivery request from one of the user terminals;
fetching scenario data specified by the accepted delivery request;
delivering the fetched scenario data to each of the user terminals;
accepting delivery requests for material contents from the respective user terminals;
fetching the material contents specified by the accepted. delivery requests; and
delivering the fetched material contents to the user terminals from which the respective delivery requests are accepted,
wherein each of the user terminals requests delivery of material contents not stored in the user terminal itself, out of the specified material contents, and replays material contents stored in the user terminal itself and the material contents delivered in response to the request in combination based on the delivered scenario data.

**3.** (Amended) The method of delivering contents according to claim 1, comprising the steps of:
synthesizing the fetched material contents based on the fetched scenario data; and
delivering the synthesized material contents to each of the user terminals.

**4.** (Amended) The method of delivering contents according to any one of claims 1 to 3, comprising the step of
retrieving the scenario data based on attribute information on the contents to be delivered, the scenario data including the attribute information on the contents.

**5.** (Amended) The method of delivering contents according to any one of claims 1 to 4, comprising the step of
retrieving the scenario data or material contents based on attribute information on the specified material contents, the scenario data including the attribute information on the material contents.

**6.** (Amended) The method of delivering contents according to any one of claims 1 to 5, wherein:
the scenario data includes replay time specification information for specifying the time of replay of the specified material contents in terms of relative time within the contents to be delivered; and
the plurality of user terminals replay individual pieces of the material contents specified by the delivered scenario data after lapses of time specified by the replay time specification information since the start of replay of the contents to be delivered.

**7.** (Amended) The method of delivering contents according to any one of claims 1 to 6, wherein:
the scenario data includes replay mode specification information for specifying whether to replay the specified material contents automatically or manually; and
if manual replay is specified by the replay mode specification information, each of the user terminals replays the material contents specified by the delivered scenario data at timing specified by a certain user terminal.

**8.** (Amended) The method of delivering contents according to any one of claims 1 to 7, wherein:
the scenario data includes replay application specification information for specifying an application for replaying the material contents specified; and
each of the user terminals replays the material contents specified by the delivered scenario data by using the application specified by the replay application specification information.

**9.** (Amended) The method of delivering contents according to any one of claims 1 to 8, wherein:
the scenario data includes replay screen specification information for specifying the position and size of the specified material contents to be replayed on-screen in terms of relative position within the contents to be delivered; and
each of the user terminals replays the material contents specified by the delivered scenario data in the position and size specified by the replay screen specification information within a display screen of the contents to be delivered.

**10.** (Amended) The method of delivering contents according to any one of claims 1 to 9, wherein:
the scenario data includes source terminal operation specification information for specifying an operation available to a user terminal requesting delivery in replaying the specified material contents; and
each of the user terminals accepts an operation request specified by the source terminal operation specification information from the delivery-requesting terminal and controls replay of the material contents specified by the delivered scenario data.

**11.** (Amended) The method of delivering contents according to any one of claims 1 to 10, wherein:
the scenario data includes destination terminal operation specification information for specifying an operation available to a user terminal receiving delivery in replaying the specified material contents; and
each of the user terminals accepts an operation request specified by the destination terminal operation specification information from the user terminal itself and controls replay of the material contents specified by the delivered scenario data.

**12.** (Amended) The method of delivering contents according to any one of claims 1 to 11, wherein:
the scenario data includes location information for specifying a storing location of the specified material contents; and
each of the user terminals obtains the material contents specified by the delivered scenario data from the storing location specified by the location information and replays the material contents.

**13.** (Amended) The method of delivering contents according to any one of claims 1 to 12, wherein:
the scenario data includes replay part specification information for specifying a part of the specified material contents to be replayed; and
each of the user terminals replays a part of the material contents specified by the delivered scenario data, the part being specified by the replay part specification information.

**14.** (Amended) A computer-readable recording medium, on which the scenario data for use in the method of delivering contents according to any one of claims 1 to 13 is recorded.

**15.** (Amended) A computer-readable recording medium, on which the scenario data for use in the method of delivering contents according to any one of claims 1 to 13 and the material contents specified by the scenario data are recorded.

**16.** (Amended) The method of delivering contents according to any one of claims 1 to 13, wherein:
the step of storing scenario data includes the step of creating the scenario data; and
the step of creating the scenario data includes the steps of entering a keyword, retrieving related material contents based on the entered keyword, and registering the retrieved material contents into scenario data.

**17.** (Amended) The method of delivering contents according to any one of claims 1 to 13, wherein:
the step of storing scenario data includes the steps of storing a scenario dictionary describing relationship between genres indicating types of contents to be delivered and associated information associated with the genres, and creating the scenario data; and
the step of creating the scenario data includes the steps of entering a genre, consulting the stored scenario dictionary to retrieve associated information based on the entered genre, selecting a keyword from the retrieved the associated information, retrieving material contents based on the selected keyword, and registering the retrieved material contents into scenario data.

**18.** (Amended) The method of delivering contents according to claim 16 or 17, wherein the step of registering the retrieved material contents into scenario data includes the steps of displaying a replay chart for showing the replay time of material contents specified by the scenario data under creation, and allocating the material contents to the displayed replay chart.

**19.** (Amended) The method of delivering contents according to any one of claims 1 to 13, wherein:
the step of storing scenario data includes the steps of storing scenario templates describing basic configuration patterns of scenario data, and creating the scenario data; and
the step of creating the scenario data includes the steps of entering a genre, consulting the stored scenario templates to retrieve a scenario template to be used based on the entered genre, retrieving material contents settable to the retrieved scenario template, and registering the retrieved material contents into the retrieved scenario template.

**20.** (Amended) The method of delivering contents according to any one of claims 1 to 13, wherein:
the step of storing scenario data includes the steps of storing a scenario dictionary for describing relationship between genres indicating types of contents to be delivered and associated information associated with the genres, storing scenario templates describing basic configuration patterns of scenario data, and creating the scenario data; and
the step of creating the scenario data includes the steps of entering a genre, consulting the stored scenario dictionary to retrieve associated information based on the entered genre, selecting a keyword based on the retrieved associated information, retrieving material contents based on the selected keyword, consulting the stored scenario templates to retrieve a scenario template to be used based on the entered genre, and registering the retrieved material contents into the retrieved scenario template.

**21.** (Amended) The method of delivering contents according to claim 19 or 20, wherein the scenario data stored in the step of storing scenario data is usable as a scenario template.

Statement under Art. 19.1 PCT
Claim 1 is amended to clarify that scenario data and material contents specified by the scenario data are delivered to each of user terminals on request from one of the user terminals.
 In the cited reference, materials are replayed based on a scenario on a server side and then delivered.
 The present invention provides an effect that synchronization of replay timing is facilitated, as material contents are replayed based on the delivered scenario data at each of the user terminals, and that a replay timing can be controlled from one of the user terminals according to the situation.

Claim 2 is amended to clarify that, on request from one of the user terminals, scenario data and only material contents that are not stored in each of the user terminals are delivered to each of the user terminals. This provides an effect that loads of communication lines are reduced, as it renders possible to omit delivery of material contents that are repeatedly used.

Claim 3 is amended to clarify that the present invention provides the steps of synthesizing the material contents based on the scenario data and delivering same.

Claims 4 to 13 are amended to recite a method of delivering contents, and to clarify. information included in the scenario data and procedures corresponding to the information or processing thereof in the user terminals.

Claim 14 is amended to recite a recording medium recording the scenario data used in claims 1 to 13.

Claim 15 is amended to recite scenario data that is used in claims 1 to 13 and a recording medium recording material contents specified by the scenario data.

Claims 16 to 21 are amended to recite a method of delivering contents, and to clarify that the invention provides steps of creating scenario data.
 Especially, claim 20 provides an effect that scenario data can be created by entering a genre, consulting a scenario dictionary describing relationship between genres and associated information associated therewith and scenario templates describing basic configuration patterns of scenario data.
